Europäisches Patentamt

European Patent Office

Office européen des brevets

(11) Publication number: **0 107 249**
**B1**

(12) **EUROPEAN PATENT SPECIFICATION**

(45) Date of publication of patent specification: **14.05.86**

(51) Int. Cl.⁴: **H 04 N 5/228**

(21) Application number: **83201472.4**

(22) Date of filing: **14.10.83**

(54) **Method of adjusting the current intensity of an electron beam in a pick-up tube and television camera system suitable therefor.**

| | |
|---|---|
| (30) Priority: **19.10.82 NL 8204022** | (73) Proprietor: **N.V. Philips' Gloeilampenfabrieken**<br>**Groenewoudseweg 1**<br>**NL-5621 BA Eindhoven (NL)** |
| (43) Date of publication of application:<br>**02.05.84 Bulletin 84/18** | (72) Inventor: **Blom, Hendrik**<br>**c/o INT. OCTROOIBUREAU B.V. Prof. Holstlaan 6** |
| (45) Publication of the grant of the patent:<br>**14.05.86 Bulletin 86/20** | **NL-5656 AA Eindhoven (NL)**<br>Inventor: **Stok, Filippus Leon**<br>**c/o INT. OCTROOIBUREAU B.V. Prof. Holstlaan 6**<br>**NL-5656 AA Eindhoven (NL)** |
| (84) Designated Contracting States:<br>**DE FR GB** | Inventor: **Tienkamp, Engbert**<br>**c/o INT. OCTROOIBUREAU B.V. Prof. Holstlaan 6**<br>**NL-5656 AA Eindhoven (NL)** |
| (56) References cited:<br>**GB-A-2 010 053**<br>**GB-A-2 022 968**<br>**US-A-4 331 980** | (74) Representative: **Steenken, Jacob Eduard et al**<br>**INTERNATIONAAL OCTROOIBUREAU B.V. Prof.**<br>**Holstlaan 6**<br>**NL-5656 AA Eindhoven (NL)** |

Courier Press, Leamington Spa, England.

## Description

The invention relates to a method of adjusting the current intensity of an electron beam in a pick-up tube of a television camera system, the electron beam being used for a line and field-sequential scanning of a target plate electrode in the pick-up tube, during a beam current setting period when a larger than nominal beam current intensity is selected which is greater than a nominal intensity associated with a picture signal to be produced by the pick-up tube with line and field periods with a nominal amplitude between a black level and a peak value, this larger beam current intensity being of a sufficiently high value to cause the pick-up tube, without picture information disturbance, to supply the picture signal with a greater than the nominal amplitude, and to a television camera system suitable therefor.

A television camera system employing such a method is described in the Netherlands Patent Application Nr. 8,104,143. Adjusting the beam current intensity to a higher value than the nominal value, for example to twice the value, results in that *via* the electron beam a larger (double) charge transfer to the target plate electrode can be effected than would occur at a nominally adjusted current. On the target plate electrode there is a potential image which corresponds to a picture thereof during scene recording. Very bright scene portions which exceed the nominal light intensity occur in the potential image with places having a higher potential than the nominal potential. Also these places having a higher potential than the nominal potential can be stabilized by the increased beam current in one single field scan on the beam voltage in the region of the target plate electrode. If, however, the maximum possible charge transfer is not sufficient, stabilization in one single field scan cannot occur. On display of the picture signal this results in the occurrence of comet tails being moving, very bright scene portions; the local stabilization then requires more than one single field scan, which causes disturbance of the picture information.

To enable the setting of a sufficiently, but not excessively increased beam current, which might result in an annoying defocussing, it is known, to increase a camera lens aperture by means of a diaphragm by a factor of two, starting from the nominal state, and to adjust at the luminous flux thus increased by the factor of two, the beam current such that on display of the generated picture signal no disturbance of the picture information occurs any longer in the case of very bright scene portions.

The said Patent Application has for its object to provide a beam current setting feature in which no action is performed in the optical path, as this might give rise to several disadvantages and problems. To that end the field scan at the pick-up tube is not effected at a cosntant rate, but at a variable rate and more specifically alternately at half the rate, twice the rate and half the rate over always one-third part of the field scan. As a result thereof, in the central third part the doubled rate will result in halving of the possible charge transfer *via* the electron beam or in halving the effective beam current intensity, so that at very bright scene portions the picture information is disturbed. The nominal beam current is now increased such that on display of the picture signal no distorted scene portions occur any longer in the central third part, whereafter the normal field scan follows.

It is also an object of the invention to provide a beam current setting feature without action being taken in the optical path, however, without the use of a variable field scan rate which causes, at variations of the rate, ever occurring transition and cross-talk phenomena and non-linearities, which may particularly be expected at double the rate of field scan.

A method according to the invention is therefore characterized in that during the beam current setting period the electron beam current is suppressed periodically, before each field period in which a field scan is effected, during (n—1) preceding field periods and within those field periods during at least a line period portion of at least a plurality of consecutive line periods $n$ being an integer greater than one, a beam current intensity setting being effected in the beam current setting period which corresponds to a maximum picture signal amplitude to be reached.

An embodiment of the method in which minimum beam current blanking is employed, is characterized in that the said plurality of consecutive line periods in which the electron beam current is suppressed is at least four line periods.

A determined, further picture portion selection can be obtained in an embodiment of a method which is characterized in that the electron beam current is suppressed during several pluralities of consecutive line periods in the preceding, at least one field period.

A simple embodiment of a method according to the invention is characterized in that the electron beam current is suppressed during all the line periods in the preceding at least one field period.

A television camera system suitable for performing a method according to the invention is characterized in that the camera system comprises a synchronized beam current blanking circuit coupled to an electron gun in the pick-up tube for producing the electron beam and comprising a picture signal peak detector coupled to a pick-up tube output for supplying the picture signal.

The television camera system may then comprise a television camera, optionally having a remote camera control unit, tape recording and display devices and optionally picture and/or waveform display devices at the camera or at the control unit.

A further embodiment of a television camera system according to the invention is characterized in that for a manual setting of the beam current the picture signal peak detector is in the form of a waveform display device and the camera system comprises a manually adjustable beam current setting circuit.

Another embodiment is characterized in that for an automatic setting of the beam current the picture signal peak detector is in the form of a signal peak detection circuit having an output coupled to a setting input of a beam current setting circuit.

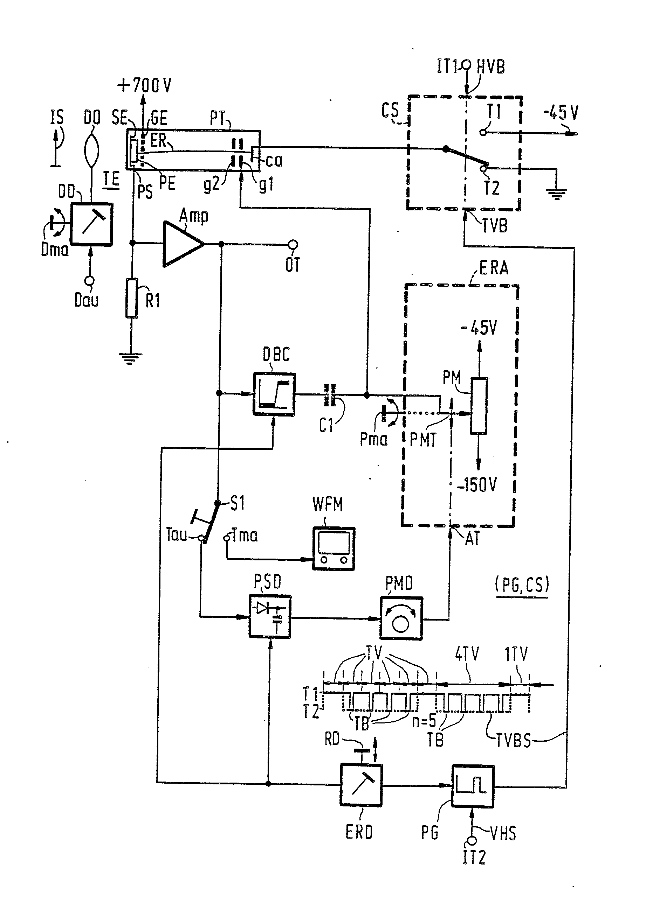

The invention will now be described in greater detail by way of example with reference to the accompanying Figure, which Figure shows in the form of a block diagram an embodiment of a television camera system according to the invention suitable for performing the method according to the invention.

In the Figure, PT denotes a television pick-up tube which forms part of a television camera system. This television camera system may be suitable for standardized or non-standardized black-white or colour television, one or more pick-up tubes PT possibly being present in the latter case. The pick-up tube PT is provided in a television camera which is combined with a camera control unit either remote or not remote from the camera, of which camera some elements and circuits which are essential for explaining the invention will be described in greater detail. Picture and waveform display devices and picture pick-up and display devices for storing picture information may form part of the camera system. In the Figure, a waveform display device is denoted by WFM, by way of example. The device WFM is, for example, provided in the remote camera control unit.

In the Figure a diaphragm aperture is denoted by DO. The diaphragm aperture DO is coupled to a diaphragm control device DD. The device DD may comprise a manual control Dma and/or a control input terminal Dau. For an automatic control of the diaphragm aperture DO a control signal is applied to the terminal Dau. A manual setting is effected via the control Dma.

Light originating from, for example, a source of information IS being a scene is conveyed to the pick-up tube PT via the diaphragm aperture DO in the optical path to the pick-up tube PT and in the pick-up tube the light is applied through a window to a target plate electrode TE which is composed of a transparent, electrically conducting metal layer by way of signal electrode SE and a photo-sentisitve semiconductor layer PE. The light originating from the (scene) information source IS is converted in the photosensitive semiconductor layer PE into a potential image which thus corresponds to a scene image. The potential image is built up in the semiconductor layer PE in a light integration period by photons of the incident light. The information source IS may be a scene to be recorded or a test pattern chart to be recorded located before the camera, or in the form of a test pattern slide in the camera and which optionally be projected onto the target plate electrode TE. In the pick-up tube PT the semiconductor layer PE of the target plate electrode TE is scanned line and field sequentially by an electron beam ER, using deflection and focussing means, not shown. The signal electrode SE of the target plate electrode TE is connected to an output which carries a picture signal PS, of the pick-up tube PT, which output is further connected to ground via a resistor R1. During the field scan of the target plate electrode TE the potential image on this electrode is converted into an electric current through the resistor R1. The corresponding voltage drop across the resistor R1 results in the picture signal PS, which is thus produced by the pick-up tube PT and becomes available at a terminal OT via a signal amplifier Amp. Let it be assumed that the amplifier Amp comprises a preamplifier, which may be followed by further amplifiers.

In the pick-up tube PT some components which are relevant to the explanation of the operation are shown schematically. A cathode is denoted by ca, a first electrode by g1 and a second electrode by g2, which components together provide an electron gun (ca, g1, g2) which is capable of producing the electron beam ER. The electrode g1 is a current setting and control electrode and the electrode g2 is an anode electrode. GE near the target plate electrode TE denotes a mesh electrode. For the sake of simplicity further electrodes have been omitted.

Outside the pick-up tube PT, the cathode ca is connected to a controlled electronic switching circuit CS, which for the sake of simplicity is shown as a mechanical change-over switch having two change-over terminals T1 and T2. The terminal T1 is connected to a supply terminal which carries a voltage of, for example, −45V. The terminal T2 is connected to ground. The −45V supply voltage is supplied by a voltage source, not shown, whose further terminals carry other voltages, or are connected to ground. The mesh electrode GE is connected to a terminal carrying a voltage of, for example, +700V. In the controlled switching circuit CS a change-over action is effected between the terminals T1 and T2 under the control of a switching signal applied to a switching input HVB or TVB. The signal supply to the switching input TVB is a part of the invention and will be referred to in the further course of the description. The switching input HVB is connected to a switching input terminal IT1 to which a line and field blanking signal, which is customary in television is applied. In line- and field blanking periods the terminal T2 is connected to the cathode ca. The electron beam ER is then blanked (suppressed), as in the possible current path via the resistor R1, the target plate electrode TE, the beam ER, the cathode ca and the switching circuit CS, no current can flow through the interconnection contained therein from the terminal T2 which is connected to ground as the resistor R1 is also connected to ground. Outside the line and field blanking periods the terminal T1 which carries the −45V voltage is through-connected, so that from the terminal T1 electrons can flow via the electron beam ER through the resistor R1 and to the mesh electrode GE. The current intensity of the electron beam ER is predominantly determined by the voltage at the first grid g1. The current distribution over the resistor R1 and the mesh electrode GE depends on the potential value in the potential image on the target plate electrode TE in the region of landing of the electron beam ER. When the voltage drop across the electron beam ER is disregarded, the semiconductor layer PE of the target plate electrode TE in the electron beam landing spot is brought to −45V, the charge required therefore being deposited *in situ* by electron beam ER and the superfluous charge in the beam ER is conveyed to the mesh electrode GE. The locally deposited charge corresponds to the current flowing through the resistor R1. The semiconductor layer PE of the target plate electrode TE is stabilized in the beam landing spot at (substantially) −45V. With an increasing luminous flux on the target plate electrode TE more charge is deposited there by the electron beam ER to provide the said stabilization, until ultimately all the available charge has been deposited. With a still further increasing supply of light the target plate electrode TE can no longer be stabilized at the voltage of −45V, with all the above-described consequences.

In the Figure it is shown that the first grid electrode g1 is connected to a tap PMT of a potentiometer PM arranged between two voltage supply terminals carrying voltages of −45V and −150V, respectively. A less negative voltage at the potentiometer tap PMT results in the electron gun (ca, g1, g2) producing *via* the electrode g1 an electron beam ER with a higher current intensity, and *vice versa*. The desired beam current intensity can be set by means of a manual control Pma. The potentiometer PM and the control Pma form a beam current setting circuit ERA which may further having a setting input AT for receiving a setting signal when an automatic setting feature is desired.

In addition to the beam current setting circuit ERA with the manually or automatically performed (quiescent) setting of the beam current intensity it is possible, as shown in the Figure, to provide a dynamic beam current control circuit DBC. The circuit DBC has an input which is connected to the output of the amplifier Amp and an output thereof is connected to the first grid electrode g1 *via* a coupling capacitor C1. The circuit DBC comprises a threshold- and limiting circuit with the aid of which, without oscillations, the current intensity of the electron beam ER can be adjusted dynamically in dependence on the value of potential differences in the potential image on the target plate electrode TE. For a circuit DBC which operates adequately in practice, reference is made to United Kingdom Patent Specification Nr. 2,020,053. When used in the camera with a pick-up tube (PT) comprising an anti-comet tail gun further circuits required therefor may be present.

From the last-mentioned United Kingdom Patent Specification the television camera described so far with reference to the Figure is derivable comprising the pick-up tube PT, the amplifier Amp, the controlled switching circuit CS having the switching input HVB, the beam current setting circuit ERA and the dynamic beam current control circuit DBC. The above-mentioned voltage values are given by way of example and they may each be assumed to be further increased by +45V when it is desired to effect the potential image stabilization at the OV ground potential.

For the description of the method according to the invention the following holds. In the camera system shown in the Figure, ERD designates a control device for the beam current setting, which device can be made operative and inoperative by means of an on/of control RD. When the device ERD is made operative, the circuit DBC is made inoperative, as it must not affect the (quiesent) setting of the beam current intensity. Let it be assumed that in this situation a luminous flux is received from the information source IS with a given light intensity which is less than a desired value at which the beam current setting should be effected. When a test pattern chart in front of the camera as the information source IS is used, the diaphragm aperture DO is, for example, already at its maximum opening or for some reason or another it is problematical to increase the aperture. A further possibility is that the information source IS comprises a test slide projector whose maximum light intensity is not sufficiently large. Then the composition of the projector light may deviate from the composition of the light coming from a scene to be recorded by the camera after the beam current setting. When the colour temperature of the test light during the beam current setting deviates to a significant extent from the colour temperature of the future scene light problems occur, more specifically with a colour television camera comprising several pick-up tubes. When the test light contains a, for example, blue light component to a much lesser extent than the future scene light it is very difficult to effect the beam current setting in an optimum way at the pick-up tube which is intended for recording the blue scene light component.

In view of the foregoing, let it be assumed that before and at the beam current setting no specific actions affecting the light current intensity are effected at the diaphragm aperture DO and the information source at the diaphragm aperture DO and the information course IS. When the device ERD is made operative, the decision can be made whether an automatic or manual setting will be effected. To that end, a change-over switch S1 is shown in the Figure having change-over terminals Tau and Tma, respectively. The output of the amplifier Amp is connected to a terminal of the change-over switch S1 which is optionally connectable to the terminal Tau or Tma. The terminal Tma is, for example, connected to an input of the waveform monitor WFM which, as will become clear hereafter, can be used during the manual setting as a picture signal peak detector. The terminal Tau is connected to an input of a picture signal peak detection circuit PSD as a peak detector. An input of the circuit PSD is connected to the device ERD, which provides for its being put into operation. *Via* a drive circuit PMD an output of the circuit PSD is connected to the setting input AT of the beam current setting circuit ERA, to readjust the potentiometer tap PMT until a maximum picture signal amplitude is detected by the circuit PSD. A manual setting (S1, Tma) or an automatic setting (S1, Tau) of the electron beam current can be effected optionally.

An output of the device ERD is connected to an input of a pulse generator PG, to a further input of which a synchronizing signal VHS is applied *via* an input terminal IT2. The signal VHS comprises at least field synchronizing pulses, line synchronizing pulses possibly being present depending on the structure of a signal TVBS to be produced by the pulse generator PG. The output of the pulse generator PG, which carries the signal TVBS is connected to the switching input TVB of the controlled switching circuit CS. Two signal levels are denoted at the signal TVBS by T1 and T2, indicating that in this situation the terminal T1 to T2, respectively is connected to the cathode ca of the electron gun (ca, g1, g2) of the pick-up tube PT. From the foregoing it follows that when the terminal T2 is through-connected, the electron beam ER in the pick-up tube PT is blanked. The pulse generator PG and the controlled switching circuits CS operate in accordance with the invention as a synchronized beam current blanking circuit (PG, CS).

Let it be assumed that the signal supply to the switching input TVB of the switching circuit CS dominates relative to the signal supply to the switching input HVB when, under the control of the signal TVBS the terminal T2 is through-connected. When the level T1 is present in the signal TVBS, the line and field blanking signal applied to the switching input HVB is active in customary manner for switching between the terminals T1 and T2.

After the control device ERD has been made operative for setting the beam current the signal TVBS is active at the switching circuit CS. In the signal TVBS which in the Figure is shown versus the time, TV denotes some field periods and 4TV and 1TV together denote a time duration with n=5 field periods, which periodically occurs in the beam setting period. TB denotes a small portion of some field periods TV occurring approximately halfway thereof. The time period TB comprises a plurality of consecutive line periods of, for example, a variable number.

The signal TVBS is shown for two cases, by means of solid and by means of dotted lines, respectively. From the dotted signal variation it follows that prior to the field period 1TV with a field scan being effected, during four preceding field periods 4TV the electron beam ER is blanked during all line periods. This results in the target plate electrode TE being scanned once in every n=5 field periods. This results in the light integration period at the target plate electrode TE being increased by a factor of five. The potential image on the target plate electrode TE now requires for the stabilization during the field 1TV a five times greater charge transfer *via* the electron beam ER. When the beam current setting (S1, Tma) is effected manually, a camera operator readjusts the manual control Pma, which causes the potentiometer tap PMT to be connected to the −45V supply voltage terminal, while he watches at the same time the display screen of the waveform display device WFM. The potentiometer readjustment is effected for such a long period of time until no further picture signal amplitude increase can be observed on the device WFM. This is an indication that the current intensity of the electron beam ER has then been adjusted for an optimum stabilization at the target plate electrode TE.

From the signal variation, illustrated by means of solid lines, of the signal TVBS it follows that not all the line periods in the four field periods 4TV are blanked, but a plurality of consecutive line periods occurring in the periods TB. Outside the periods TB the customary field scan is effected. This results in a bright, horizontal picture strip corresponding to ther period TB being present during picture signal display. During the manual beam current setting (S1, Tma), setting is effected at a maximum picture signal amplitude in the picture strip at a minimum beam current required therefor.

Starting from the fact that during the customary, interlaced field scan the line scan per field is not effected on lines which are separated from each other, but that line overlap is present, it is desirable to employ a picture strip of some lines for the beam current setting. For a minimum beam blanking a number of consecutive line periods of at least of the order of four is mentioned.

In addition, it is possible to blank the electron beam ER only in one or more portions of line periods instead of in entire line periods. If in the at least one field period (n=2), the electron beam ER is not totally blanked during all line periods but only during a portion thereof, for example the first half, the left half of a displayed television picture can then be employed for the beam current setting. Also for the choice of the picture strip the electron beam ER need not to be blanked during the entire line period for the above-mentioned plurality of consecutive line periods. A sort of window in the centre of a display picture might be considered.

A further picture portion selection can be achieved when in the preceding at least one field period (n=2), during several pluralities of consecutive line periods (periods TB) the electron beam ER is blanked and more specifically during entire line periods or one or more portions of line periods.

In the foregoing description, starting from a beam current of too low an intensity for an adequate potential picture stabilization, the beam current intensity at the beam current setting is increased to such a level until a maximum picture signal amplitude which no longer increases is detected. The other possibility is, starting from a beam current intensity which is too high, to reduce this beam current intensity until the commencement of a decrease of the picture signal amplitude is detected. In both cases the adjusted current intensity is the minimum intensity sufficient for the potential image stabilization. Adjustment can be effected to approximately this value.

For the automatic setting (S1, Tau) of the beam current intensity, use can be made of a microcomputer or a microprocessor, respectively which can then, for example, cooperate with the control device ERD, the drive circuit PMD for the potentiometer tap PMT and, possibly, the picture signal peak detection circuit PSD. In addition, the beam current setting circuit ERA, shown by way of example with the potentiometer PM, may be provided by a digitally controlled voltage source. As an alternative for the use of the picture signal peak detection (PSD) it would be possible to calculate the minimum beam current intensity for the maximum picture signal amplitude with the aid of the microcomputer or microprocessor, respectively after a number of measurements of the picture signal amplitude after a number of readjustments at the circuit ER.

## Claims

1. A method of adjusting the current intensity of an electron beam in a pick-up tube of a television camera system, the electron beam being used for a line and field sequential scanning of a target plate electrode in the pick-up tube, during a beam current setting period when a larger than nominal beam current intensity is selected which is greater than a nominal intensity associated with a picture signal to be produced by the pick-up tube with line and field periods with a nominal amplitude between a black level and a peak value, this larger beam current intensity being of a sufficiently high value to cause the pick-up tube, without picture information disturbance, to supply the picture signal with a greater than the nominal amplitude, characterized in that during the beam current setting period the electron beam current is suppressed periodically, before each field period in which a field scan is effected, during (n—1) preceding field periods and within those field periods during at least a line period portion of at least a plurality of consecutive line periods, $n$ being an integer greater than one, a beam current intensity setting being effected in the beam current setting period which corresponds to a maximum picture signal amplitude to be reached.

2. A method as claimed in Claim 1, characterized in that said plurality of consecutive line periods in which the electron beam current is suppressed is at least four line periods.

3. A method as claimed in Claim 1 or 2, characterized in that the electron beam current is suppressed during several pluralities of consecutive line periods in the preceding at least one field period.

4. A method as claimed in Claim 1, characterized in that the electron beam current is suppressed during all the line periods in the preceding at least one field period.

5. A television camera system suitable for performing a method as claimed in any of the preceding Claims, characterized in that the camera system comprises a synchronized beam current blanking circuit (PG, CS) coupled to an electron gun (ca, g1, g2) in the pick-up tube (PT) for producing the electron beam (ER) and comprising a picture signal peak detector (PSD) coupled to a pick-up tube output for supplying the picture signal.

6. A television camera system as claimed in Claim 5, characterized in that for a manual setting of the beam current the picture signal peak detector is in the form of a waveform display device (WFM) and the camera system comprises a manually adjustable beam current setting circuit (ERA).

7. A television camera system as claimed in Claim 5, characterized in that for an automatic setting of the beam current the picture signal peak detector is in the form of a signal peak detection circuit having an output coupled to a setting input of a beam current setting circuit.

## Patentansprüche

1. Verfahren zum Einstellen der Stromstärke eines Elektronenstrahles in einer Aufnahmeröhre eines Fernsehkamerasystems, wobei der Elektronenstrahl zur horizontalen und vertikalen Abtastung einer Auftreffplattenelektrode in der Aufnahmeröhre dient, wobei während einer Strahlstromeinstellzeitdauer eine grössere Strahlstromstärke eingestellt wird als eine Nennstärke, die einem von der Aufnahmeröhre mit Horizontal- und Vertikalperioden zu liefernden Bildsignal mit einer Nennamplitude zwischen einem Schwarzpegel und einem Weisswert zugeordnet ist, wobei die grössere Strahlstromstärke gross genug ist um ohne Bildinformationsstörung die Aufnahmeröhre das Bildsignal mit mehr als der Nennamplitude liefern zu lassen, dadurch gekennzeichnet, dass während der Strahlstromeinstellzeitdauer periodisch vor jeder Vertikalperiode mit einer Vertikalabtastung, während (n—1) vorhergehender Vertikalperioden und darin während wenigstens eines Horizontal-Periodenteils mindestens einer Anzahl aufeinanderfolgender Horizontal-Perioden der Elektronenstrahlstrom ausgetastet wird, wobei n eine ganze Zahl ist grösser als eins, und wobei in der Strahlstromeinstellzeitdauer eine Strahlstromstärkeneinstellung durchgeführt wird, die einer maximal erreichbaren Bildsignalamplitude entspricht.

2. Verfahren nach Anspruch 1, dadurch gekennzeichnet, dass die genannte Anzahl aufeinanderfolgender Horizontal-Perioden, dass der Elektronenstrahlstrom ausgetastet wird, mindestens in der Grössenordnung von 4-Horizontalperioden liegt.

3. Verfahren nach Anspruch 1 oder 2, dadurch gekennzeichnet, dass in der vorhergehenden mindenstens einen Vertikal-Periode, während mehrerer Anzahlen aufeinanderfolgender Horizontal-Perioden der Elektronenstrahlstrom ausgetastet wird.

4. Verfahren nach Anspruch 1, dadurch gekennzeichnet, dass in der vorhergehenden mindestens einen Vertikal-Periode der Elektronenstrahlstrom während aller Horizontal-Perioden ausgetastet wird.

5. Fernsehkamerasystem zum Durchführen eines Verfahrens nach einem der vorstehenden Ansprüche, dadurch gekennzeichnet, dass das Kamerasystem mit einer synchronisierten Strahlstromaustastungsschaltungsanordnung (PG, CS), die mit einem Elektronenstrahlerzeugungssystem (ca, g1, g2) in der Aufnahmeröhre (PT) zum Liefern des Elektronenstrahles (ER) gekoppelt ist, sowie mit einem Bildsignalspitzendetektor (PSD) versehen ist, der mit einem Aufnahmeröhrenausgang zum Liefern des Bildsignals gekoppelt ist.

6. Fernsehkamera nach Anspruch 5, dadurch gekennzeichnet, dass zur handmässigen Einstellung des Strahlstromes der Bildsignalspitzendetektor als Wellenformwiedergabeanordnung (WFM) ausgebildet und das Kamerasystem mit einer handmässig einstellbaren Strahlstromeinstellschaltungsanordnung (ERA) versehen ist.

7. Fernsehkamerasystem nach Anspruch 5, dadurch gekennzeichnet, dass zur automatischen Einstellung des Strahlstromes der Bildsignalspitzendetektor als Signalspitzendetektionsschaltungsanordnung ausgebildet ist, die mit einem Ausgang versehen ist, der mit einem Einstelleingang einer Strahlstromeinstellschaltunganordnung gekoppelt ist.

## Revendications

1. Procédé pour régler l'intensité du courant d'un faisceau d'électrons dans un tube de prise de vues d'un système de caméra de télévision, le faisceau d'électrons étant utilisé pour un balayage á séquence de lignes et de trames d'une cible électrode dans le tube de prise de vues, pendant une période d'établissement de courant de faisceau lorsqu'une intensité du courant de faisceau supérieure à l'intensité nominale est sélectionnée, cette intensité étant supérieure à une intensité nominale associée à un signal d'image à produire par le tube de prise de vues avec des périodes de lignes et de trames et une amplitude nominale entre un niveau de noir et une valeur de crête, cette intensité de courant de faisceau supérieure étant d'une valeur suffisamment élevée pour amener le tube de prise de vues, sans perturbation de l'information d'image à fournir le signal d'image avec une amplitude supérieure à l'amplitude nominale, caractérisé en ce que pendant la période d'établissement de courant de faisceau, le courant de faisceau d'électrons est supprimé périodiquement, avant chaque période de trame dans laquelle un balayage de trame est effectué, pendant (n—1) périodes de trame précédentes et, dans ces périodes de trame, pendant au moins une section de périodes de lignes d'au moins plusieurs périodes de lignes consécutives, $n$ étant un nombre entier supérieur à un, une opération de réglage de l'intensité de courant de faisceau étant effectuée dans la période d'établissement de courant de faisceau qui correspond à une amplitude de signal d'image à atteindre.

2. Procédé suivant la revendication 1, caractérisé en ce que le nombre de périodes de lignes consécutives dans lesquelles le courant de faisceau est supprimé est d'au moins quatre.

3. Procédé suivant la revendication 1 ou 2, caractérisé en ce que le courant de faisceau d'électrons est supprimé pendant plusieurs séries de périodes de lignes consécutives dans la dite au moins une période de trame précédente.

4. Procédé suivant la revendication 1, caractérisé en ce que le courant de faisceau d'électrons est supprimé pendant toutes les périodes de lignes dans la dite au moins une période de trame précédente.

5. Système de caméra de télévision convenant pour mettre en oeuvre un procédé suivant l'une quelconque des revendications précédentes, caractérisé en ce qu'il comprend un circuit de suppression de courant de faisceau synchronisé (PG, CS) couplé à un canon à électrons (ca, g1, g2) dans le tube de prise de vues (PT) pour produire le faisceau d'électrons (ER) et comprenant un détecteur de crête de signal d'image (PSD) couplé à une sortie du tube de prise de vues pour fournir le signal d'image.

6. Système de caméra de télévision suivant la revendication 5, caractérisé en ce que pour un réglage manuel du courant de faisceau, le détecteur de crête du signal d'image a la forme d'un dispositif de visualisation de forme d'onde (WFM) et le système de caméra comprend un circuit de réglage de courant de faisceau réglable à la main (ERA).

7. Système de caméra de télévision suivant la revendication 5, caractérisé en ce que pour un réglage automatique du courant de faisceau, le détecteur de crête de signal d'image a la forme d'un circuit de détection de crête de signal comportant une sortie couplée à une entrée de réglage d'un circuit de réglage de courant de faisceau.